# EUROPÄISCHE PATENTSCHRIFT

(11) **EP 2 475 150 B1**
(45) Veröffentlichungstag und Bekanntmachung des Hinweises auf die Patenterteilung: **20.04.2016**
(21) Anmeldenummer: 11000115.3
(22) Anmeldetag: 10.01.2011
(51) Int. Cl.: H04L 29/12, H04L 12/761, H04L 12/18

(54) **Verfahren zur Konfiguration eines Empfängers zum Empfang von mittels eines Kommunikationsnetzwerks verteilten breitbandigen Multicast-Signalen, sowie Empfänger und System**
Method for configuring a receiver for receiving broadband multicast signals using a communication network, and receiver and system
Procédé de configuration d'un récepteur pour la réception de signaux de multidiffusion à large bande répartis à l'aide d'un réseau de communication, ainsi que récepteur et système

(43) Veröffentlichungstag der Anmeldung: 11.07.2012
(73) Patentinhaber: Deutsche Telekom AG, 53113 Bonn (DE)
(72) Erfinder: Leymann, Nicolai, 10435 Berlin (DE); Beckhaus, Thomas, 64289 Darmstadt (DE)
(74) Vertreter: Schwöbel, Thilo K.

(56) Entgegenhaltungen:
- US-A1- 2007 110 048
- US-A1- 2009 129 386
- LEMON NOMINUM T ET AL: "The Classless Static Route Option for Dynamic Host Configuration Protocol (DHCP) version 4; rfc3442.txt", IETF STANDARD, INTERNET ENGINEERING TASK FORCE, IETF, CH, 1. Dezember 2002 (2002-12-01), XP015009225, ISSN: 0000-0003
- ALEXANDER SILICON GRAPHICS S ET AL: "DHCP Options and BOOTP Vendor Extensions; rfc2132.txt", IETF STANDARD, INTERNET ENGINEERING TASK FORCE, IETF, CH, 1. März 1997 (1997-03-01), XP015007916, ISSN: 0000-0003

## Beschreibung

### Stand der Technik

Die vorliegende Erfindung betrifft ein Verfahren zur Konfiguration eines Empfängers zum Empfang von mittels eines Kommunikationsnetzwerks verteilten breitbandigen Multicast-Signalen. Beispiele für dem Stand der Technik sind US 2007/110048, US 2009/129386, RFC3442 "The Classless Static Route Option for DHCP version 4".

Solche Multicast-Signale sind insbesondere als sog. IPTV-Signale (Internet Protocol Television-Signale) gängig und werden über Breitband-Telekommunikationsnetzwerke-insbesondere unter Verwendung von DSL-Teilnehmeranschlüsse (Digital Subscriber Line) an eine Vielzahl von Teilnehmern, beispielsweise Haushalte, übertragen. Die Teilnehmer weisen üblicherweise ein Netzabschlussgerät, insbesondere einen sogenannten Router, auf, so dass eine breitbandige Anbindung des Teilnehmers möglich ist. Das Netzabschlussgerät bzw. der Router bzw. das sogenannte CPE (customer premises equipment, d.h. das Gerät, welches oftmals im Haushalt des Kunden steht) wird im Folgenden auch als Empfänger bezeichnet.

Bei der Verwendung des IGMP-Protokolls (Internet Group Management Protocol) wird im Empfänger, d.h. im kundenseitigen Router bzw. Netzabschlussgerät, typischerweise ein sogenannter IGMP-Proxy verwendet. Ein solcher IGMP-Proxy, nachfolgend auch als Proxy-Einheit bezeichnet, ist eine Kommunikationsschnittstelle in einem Netzwerk, die als Vermittler arbeitet, d.h. auf der einen Seite Anfragen entgegennimmt, um dann über seine eigene Adresse eine Verbindung zur anderen Seite herzustellen. Als Verbindungsglied zwischen unterschiedlichen Netzwerken realisiert der Proxy eine Verbindung zwischen verschiedenen Kommunikationspartnern, nämlich im Fall der Verteilung von breitbandigen Multicast-Signalen in einem Kommunikationsnetzwerk zwischen einer Servereinrichtung (die die Multicast-Signale zur Verfügung stellt) und den die Multicast-Signale anfragenden bzw. verarbeitenden Einrichtungen im lokalen Netzwerk des Kunden der Multicast-Dienstleistung, etwa ein Fernsehgerät.

Viele Anbieter von Internet-Dienstleistungen (Internet Provider) verwenden zur Trennung von verschiedenen Diensten unterschiedliche Schnittstellen, insbesondere unterschiedliche Servereinrichtungen, beispielsweise verschiedene üiensüeisiungsneize (wie beispielsweise Service VLANs (Virtual Local Area Networks) oder PPPoE Sitzungen (Point-to-Point Protocol over Ethernet sessions). Damit sind auf der Seite des Empfängers, d.h. auf der Seite des Netzabschlussgeräts des Kunden, typischerweise verschiedene Schnittstellen für die Kommunikationsrichtung vom Empfänger zur Servereinrichtung (diese Kommunikationsrichtung wird auch als "Aufwärts-Richtung" bzw. upstream-Richtung und die entsprechenden Schnittstellen als "upstream interfaces" bezeichnet). Bei mehreren solchen "upstream interfaces" kommen diese auch für die Übertragung von Multicast-Signalen in Frage.

Die Konfiguration der Aufwärts-Schnittstelle oder der Mehrzahl von Aufwärts-Schnittstellen für die Proxy-Einheit erfolgt typischerweise entweder beim Einrichten des Routers, d.h. beim Einrichten des Empfängers (bzw. Netzabschlussgerät oder CPE) oder durch eine fest vorgegebene Konfiguration (quasi bei der Herstellung des Geräts). Hierdurch wird im laufenden Betrieb der Proxy-Einheit eine Vorkonfiguration vorgegeben, die - insbesondere im Fall der fest vorgegebenen Einstellung bzw. Konfiguration - gar nicht geändert werden kann oder aber nur mit teilweise erheblichem technischen und zeitlichen Aufwand bzw. nicht zeitnah oder nur in größeren Zeitintervallen oder zu bestimmten Zeitfenstern wie Serviceintervalle. Insbesondere ist hierbei einer Änderung der Konfiguration der Proxy-Einheit zur Laufzeit des Empfängers, d.h. dynamisch, nicht möglich.

Der Erfindung liegt die Aufgabe zugrunde, ein Verfahren bereitzustellen, das in diesem Zusammenhang eine einfache und sichere Möglichkeit bereitstellt in effizienter Weise das Kommunikationsnetzwerk so zu steuern, dass Konfigurationsänderungen des Empfängers, insbesondere der Proxy-Einheit, derart möglich sind, dass eine einfache und schnelle Anpassung an unterschiedliche Anforderungen möglich ist.

### Offenbarung der Erfindung

Diese Aufgabe wird durch die unabhängigen Ansprüche gelöst. Beispiele sind ein Verfahren zur Konfiguration eines Empfänger, wobei der Empfänger zum Empfang von mittels eines Kommunikationsnetzwerks verteilten breitbandigen Multicast-Signalen vorgesehen ist, wobei die Multicast-Signale dem Empfänger über wenigstens eine Servereinrichtung zur Verfügung gestellt werden, wobei der Empfänger eine Proxy-Einheit zur Kommunikation mit der Servereinrichtung aufweist, wobei der Empfänger eine Konfigurationsinformation zur Bestimmung der durch die Proxy-Einheit zu verwendenden Schnittstelle für die Kommunikationsrichtung vom Empfänger zur Servereinrichtung aufweist, wobei die Konfigurationsinformation dem Empfänger dynamisch mittels eines Konfigurations- oder Routingprotokolls übermittelt wird.

Hierdurch ist es erfindungsgemäß in vorteilhafter Weise möglich, dass in einfacher Weise eine Auswahl bzw. eine Änderung der für die Kommunikation mit einer bestimmten Servereinrichtung zu verwendende Adressierung möglich ist. Daher ist es erfindungsgemäß in vorteilhafter Weise nicht erforderlich, dass im Fall von Konfigurationsänderungen - beispielsweise hervorgerufen durch eine Servermigration - auf einer sogenannten Managementebene ein Eingriff in den Empfänger, d.h. in die Routereinrichtung bzw. die CPE-Einrichtung, erforderlich ist, etwa durch das Aufspielen einer Software-Aktualisierung des Empfängers.

Insbesondere ist es erfindungsgemäß vorgesehen, dass keinerlei bestehende Protokolle modifiziert oder erweitert werden müssen. Die Wahl der für die Multicast-Signale zu verwendenden Aufwärts-Schnittstellen bzw. deren Adressierungsinformationen kann vom Anbieter des Kommunikationsnetzwerks dynamisch und kurzfristig durchgeführt werden, da lediglich netzwerkseitig die Routingtabelle der Proxy-Einheit anzupassen ist. Dies führt erfindungsgemäß zu einer erheblichen Vereinfachung und damit Kostenersparnis bei der Anpassung bzw. der Veränderung von Multicast-Diensten, da die Notwendigkeit entfällt, Endgeräte (d.h. Empfänger bzw. CPE) beim Kunden auszutauschen oder umkonfigurieren zu müssen. Die Proxy-Einheit bzw. der IGMP-Proxy führt in der Regel eine eigene Routingtabelle, die unabhängig von der Routingtabelle auf dem Empfänger bzw. der CPE ist. Über den Mechanismus der netzwerkseitigen Anpassung der Routingtabelle der Proxy-Einheit wird in erster Linie die Tabelle in der Proxy-Einheit modifiziert (allerdings kann zusätzlich auch die Routingtabelle auf der CPE angepasst werden, dies ist aber nur dann notwendig, wenn ein Endgerät bzw. CPE auch Multicast-Daten in das Netz schicken soll).

Erfindungsgemäß ist es bevorzugt, dass die Konfigurationsinformation dem Empfänger mittels eines der folgenden Konfigurations- oder Routingprotokolle zur Verfügung gestellt wird:
-- DHCP-Protokoll unter Verwendung der option 121 (Dynamic Host Configuration Protocol, option 121 classless static route option),
-- DHCP-Protokoll unter Verwendung der option 33 (Dynamic Host Configuration Protocol, option 33),
- RIP-Protokoll (Routing Information Protocol),
-- OSPF-Protokoll (Open Shortest Path First protocol).

Hierdurch ist es erfindungsgemäß vorteilhaft möglich, dass in flexibler Weise auf die jeweiligen Gegebenheiten des Kommunikationsnetzwerks bei der Auswahl des verwendeten Konfigurationsprotokolls bzw. Routingprotokolls eingegangen werden kann. Beispielsweise kann durch Verwendung des DHCP-Protokolls, insbesondere mit der Option 121, in einfacher Weise eine (beispielsweise aufgrund von Änderungen im Kommunikationsnetzwerk) geänderte Routingtabelle der Proxy-Einheit an den Empfänger übertragen werden. Diese Routingtabelle der Proxy-Einheit wird dann von der Proxy-Einheit verwendet, um die Entscheidung zu treffen, über welche Schnittstelle die IGMP Nachrichten gesendet werden sollen. Alternativ kann die Routingtabelle auch über ein geeignetes Routing-Protokoll - z.B. RIP oder OSPF - im Empfänger aktualisiert werden.

Gemäß einer bevorzugten Ausführungsform der vorliegenden Erfindung ist es vorgesehen, dass der Empfänger neben der Proxy-Einheit eine weitere Proxy-Einheit zur Kommunikation mit der Servereinrichtung aufweist, wobei der Empfänger eine weitere Konfigurationsinformation zur Bestimmung der durch die weitere Proxy-Einheit zu verwendenden Schnittstelle für die Kommunikationsrichtung vom Empfänger zur Servereinrichtung aufweist, wobei die weitere Konfigurationsinformation dem Empfänger dynamisch mittels eines Konfigurations- oder Routingprotokolls übermittelt wird, wobei insbesondere die weitere Konfigurationsinformation dem Empfänger mittels eines der folgenden Konfigurations- oder Routingprotokolle zur Verfügung gestellt wird:
-- DHCP-Protokoll unter Verwendung der option 121 (Dynamic Host Configuration Protocol, option 121 classless static route option),
-- DHCP-Protokoll unter Verwendung der option 33 (Dynamic Host Configuration Protocol, option 33),
-- RIP-Protokoll (Routing Information Protocol),
-- OSPF-Protokoll (Open Shortest Path First protocol).

Durch diese Maßnahme ist es erfindungsgemäß in vorteilhafter Weise möglich, dass unterschiedliche Multicast Dienste, d.h. unterschiedliche Arten von Multicast-Signalen (wie beispielsweise Multicast-Signal für IPTV-Anwendungen (umfassend insbesondere eine Mehrzahl verschiedener Kanäle) einerseits und über das Internet verbreitete Multicast-Signale ("Internet Multicast") andererseits), über verschiedene Schnittstellen bzw. Aufwärtsschnittstellen realisiert werden.

Ferner ist es erfindungsgemäß bevorzugt vorgesehen, dass die breitbandigen Multicast-Signale IPTV-Fernsehsignale (Internet Protocol Television) sind.

Erfindungsgemäß ist es weiterhin auch bevorzugt vorgesehen, dass neben der Konfigurationsinformation (bzw. weiteren Konfigurationsinformationen) Weiterleitungs-Einträge (forwarding entries) zu dem Empfänger übertragen werden, insbesondere eines der folgenden Konfigurations- oder Routingprotokolle:
-- DHCP-Protokoll unter Verwendung der option 121 (Dynamic Host Configuration Protocol, option 121 classless static route option),
-- DHCP-Protokoll unter Verwendung der option 33 (Dynamic Host Configuration Protocol, option 33),
-- RIP-Protokoll (Routing Information Protocol),
-- OSPF-Protokoll (Open Shortest Path First protocol).

Die vorliegende Erfindung bezieht sich ferner auch auf einen Empfänger zum Empfang von mittels eines Kommunikationsnetzwerks verteilten breitbandigen Multicast-Signalen, wobei eine Servereinrichtung zur Übertragung der Multicast-Signale zu dem Empfänger vorgesehen ist, wobei der Empfänger eine Proxy-Einheit zur Kommunikation mit der Servereinrichtung aufweist, wobei der Empfänger eine Konfigurationsinformation zur Bestimmung der durch die Proxy-Einheit zu verwendenden Schnittstelle für die Kommunikationsrichtung vom Empfänger zur Servereinrichtung aufweist, wobei der Empfänger zum dynamischen Empfang der Konfigurationsinformation mittels eines Konfigurations- oder Routingprotokolls vorgesehen ist.

Hierbei ist es erfindungsgemäß vorteilhaft möglich, eine Umkonfiguration insbesondere der Einstellungen der Proxy-Einheit hinsichtlich der zu kontaktierenden Servereinrichtungen in einfacher schneller und effizienter Weise durchführen zu können.

Erfindungsgemäß ist es auch beim erfindungsgemäßen Empfänger bevorzugt, dass der Empfänger zum Empfang der Konfigurationsinformation mittels eines der folgenden Konfigurations- oder Routingprotokolle vorgesehen ist:
-- DHCP-Protokoll unter Verwendung der option 121 (Dynamic Host Configuration Protocol, option 121 classless static route option),
-- DHCP-Protokoll unter Verwendung der option 33 (Dynamic Host Configuration Protocol, option 33),
-- RIP-Protokoll (Routing Information Protocol),
-- OSPF-Protokoll (Open Shortest Path First protocol).

Weiterhin ist es auch bevorzugt, wenn der Empfänger neben der Proxy-Einheit eine weitere Proxy-Einheit zur Kommunikation mit der Servereinrichtung aufweist, wobei der Empfänger eine weitere Konfigurationsinformation zur Bestimmung der durch die weitere Proxy-Einheit zu verwendenden Schnittstelle für die Kommunikationsrichtung vom Empfänger zur Servereinrichtung aufweist, wobei der Empfänger zum dynamischen Empfang der weiteren Konfigurationsinformation mittels eines Konfigurations- oder Routingprotokolls vorgesehen ist, wobei der Empfänger insbesondere zum Empfang der weiteren Konfigurationsinformation mittels eines der folgenden Konfigurations- oder Routingprotokolle vorgesehen ist:
-- DHCP-Protokoll unter Verwendung der option 121 (Dynamic Host Configuration Protocol, option 121 classess static route option).
-- DHCP-Protokoll unter Verwendung der option 33 (Dynamic Host Configuration Protocol, option 33),
-- RIP-Protokoll (Routing Information Protocol),
-- OSPF-Protokoll (Open Shortest Path First protocol).

Alternativ zu der Verwendung der Proxy-Einheit und der weiteren Proxy-Einheit ist es erfindungsgemäß auch möglich und bevorzugt, eine Proxy-Einheit zu verwenden, die eine Mehrzahl von Schnittstellen aufweist.

Weiterhin bezieht sich die vorliegende Erfindung auf ein System zur Verteilung von breitbandigen Multicast-Signalen in einem Kommunikationsnetzwerk von einer Servereinrichtung an eine Mehrzahl von Empfängern, wobei die Multicast-Signale dem Empfänger über wenigstens eine Servereinrichtung zur Verfügung gestellt werden, wobei der Empfänger eine Proxy-Einheit zur Kommunikation mit der Servereinrichtung aufweist, wobei der Empfänger eine Konfigurationsinformation zur Bestimmung der durch die Proxy-Einheit zu verwendenden Schnittstelle für die Kommunikationsrichtung vom Empfänger zur Servereinrichtung aufweist, wobei die Konfigurationsinformation dem Empfänger zur Konfiguration des Empfängers dynamisch mittels eines Konfigurations- oder Routingprotokolls übermittelt wird.

Ferner bezieht sich die vorliegende Erfindung auch auf ein Programm bzw. ein Computerprogrammprodukt mit einem computerlesbaren Programmcode zur Steuerung eines erfindungsgemäßen Empfängers oder eines erfindungsgemäßen Systems.

Ausführungsbeispiele der Erfindung sind in der Zeichnung dargestellt und in der nachfolgenden Beschreibung näher erläutert. Die Figuren schränken den allgemeinen Erfindungsgedanken nicht ein.

### Kurze Beschreibung der Zeichnungen

Figur 1 zeigt eine schematische Darstellung eines Kommunikationsnetzwerks zur Verteilung von Multicast-Signalen gemäß der vorliegenden Erfindung.
Figur 2 zeigt eine schematische Darstellung einer Verbindungssituation des Empfängers mit den Servereinrichtungen.

### Ausführungsform(en) der Erfindung

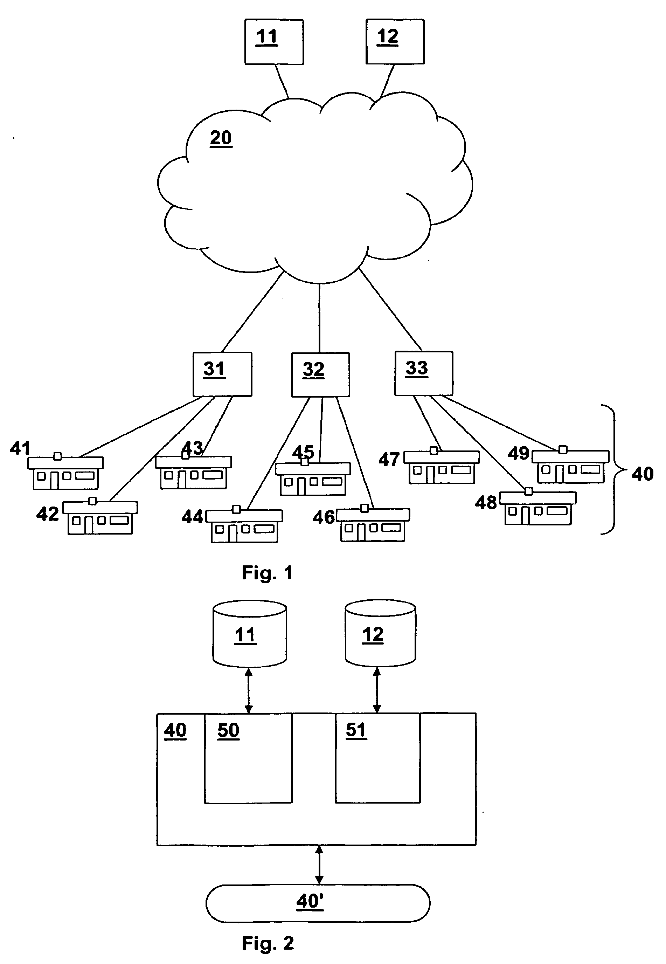

In Figur 1 ist schematisch eine schematische Darstellung eines Kommunikationsnetzwerks zur Verteilung von Multicast-Signalen gemäß der vorliegenden Erfindung abgebildet. Hierbei ist eine Mehrzahl von Servereinrichtungen 11, 12 und eine Mehrzahl von Verteileinrichtungen 31, 32, 33 vorgesehen, mit Hilfe der eine Mehrzahl von Empfängern 40 bzw. von Teilnehmern des Kommunikationsnetzwerks mit breitbandigen Signalen versorgt werden. Die Teilnehmer 40 sind insgesamt mit dem Bezugszeichen 40 bezeichnet, wobei stellvertretend für eine große Anzahl von Teilnehmern bzw. Empfängern 40 in der Figur 1 ein erster Empfänger 41, ein zweiter Empfänger 42, ein dritter Empfänger 43, ein vierter Empfänger 44, ein fünfter Empfänger 45, ein sechster Empfänger 46, ein siebter Empfänger 47, ein achter Empfänger 48 und ein neunter Empfänger 49 dargestellt ist.

Die breitbandigen Signale können als sogenannte Unicast-Signale vorgesehen sein, d.h. solche Signale, die individuell lediglich einem der Empfänger 40 bereitgestellt werden, etwa individuelle Signale, die einen Informationsinhalt etwa einer gerade von einem bestimmten der Empfänger 40 abgerufenen Internetseite bzw. via Internet zugänglichen Information entsprechen.

Ferner können die breitbandigen Signale auch als sogenannte Multicast-Signale vorgesehen sein, d.h. solche Signale die gleichzeitig einer Mehrzahl von Empfängern 40 bereitgestellt werden, weil eine Mehrzahl der Empfänger diese Multicast-Signale abonniert hat bzw. den Wunsch geäußert hat, diese Signale zu empfangen. Solche Multicast-Signale sind insbesondere IPTV-Signale, die insbesondere als verschiedene Multicast-Signale übertragbar sind und dann verschiedenen Programminhalten entsprechen. So ist es insbesondere vorgesehen, dass ein erstes Multicast-Signal einem ersten Fernsehprogramm bzw. Fernsehkanal entspricht und ein zweites Multicast-Signal einem zweiten Fernsehprogramm bzw. Fernsehkanal entspricht.

Wenn unterschiedliche Empfänger 40 den Empfangswunsch für unterschiedliche Multicast-Signale signalisiert haben, ist es möglich, Gruppen von Empfängern 40 zu bilden, die jeweils das gleiche Multicast-Signal empfangen möchten.

Von den in Figur 1 dargestellten Servereinrichtungen 11, 12 ist eine erste Servereinrichtung 11 beispielsweise zur Verteilung einer Mehrzahl von Multicast-Signalen vorgesehen, während eine zweite Servereinrichtung 12 beispielsweise zur Verteilung von Unicast-Signalen oder auch zur Verteilung weiterer Multicast-Signale (insbesondere von "Internet Multicast") vorgesehen ist. Innerhalb des Kommunikationsnetzwerks sind diese Servereinrichtungen 11, 12 typischerweise an vergleichsweise zentraler Stelle angeordnet, d.h. für einen relativ großen Netzbereich zuständig. Beispielsweise handelt es sich bei den zentralen Servereinrichtungen 11, 12 um sogenannte Remote Access Router (Fernzugriffsrouter) bzw. um sogenannte Broadband Network Gateways (Breitband Netzwerk Knoten). Insbesondere ist es erfindungsgemäß vorgesehen, dass die erste Servereinrichtung 11 als sogenannter IPTV-Service Router zur Verteilung einer Mehrzahl von Multicast-Signalen, insbesondere IPTV-Signalen, ausgebildet ist, während die zweite Servereinrichtung 12 als sogenannter BB-RAR (Broadband Remote Access Router) zur Verteilung von Unicast-Signalen, beispielsweise für Internetinhalte, ausgebildet ist.

Von den in Figur 1 dargestellten Verteileinrichtungen 31, 32, 33 ist eine erste Verteileinrichtung 31, eine zweite Verteileinrichtung 32 und eine dritte Verteileinrichtung 33 beispielsweise als Digital Subscriber Line Access Multiplexer (DSLAM), d.h. als DSL-Zugangskonzentrator, ausgebildet. Hierbei ist sowohl die erste Verteileinrichtung 31 als auch die zweite Verteileinrichtung 32 und die dritte Verteileinrichtung 33 insbesondere als sogenannte dezentrale Verteileinrichtung 31, 32, 33 ausgebildet, d.h. innerhalb des Kommunikationsnetzwerks sind diese Verteileinrichtungen 31, 32, 33 an vergleichsweise dezentraler Stelle angeordnet, d.h. für einen relativ kleinen Netzbereich zuständig.

Zwischen den Servereinrichtungen 11, 12 und den Verteileinrichtungen 31, 32, 33 können weitere Einheiten bzw. Komponenten des Kommunikationsnetzwerks angeordnet sein, die zusammenfassend mit dem Bezugszeichen 20 in Figur 1 bezeichnet sind.

In Figur 2 ist eine schematische Darstellung einer Verbindungssituation des Empfängers 40 mit den Servereinrichtungen 11, 12 dargestellt. Der Empfänger 40 weist im dargestellten Beispiel eine erste Proxy-Einheit 50 und eine weitere Proxy-Einheit 51 auf. Im dargestellten Beispiel sind ist die erste Proxy-Einheit 50 mit der ersten Servereinrichtung 11 verbunden und es ist die weitere Proxy-Einheit 51 mit der zweiten Servereinrichtung 12 verbunden. Verbunden heißt in diesem Zusammenhang, dass die Proxy-Einheit 50 bzw. die weitere Proxy-Einheit 51 derart konfiguriert sind, dass beim Bestehen eines Verbindungswunsches seitens des internen Netzwerkteils 40' eine Nachfrage nach Multicast-Signalen bei der jeweils eingestellten (bzw. "verbundenen") Servereinrichtung 11 bzw. 12 hergestellt wird.

Beispielsweise ist es in einer exemplarischen Ausführungsform möglich und bevorzugt, dass die IGMP-Proxy Funktionen für die IP-Adresse (Internet Protocol Address) 225.0.1.0/24 (d.h. für einen Multicast Dienst) über die Proxy-Einheit 50 geführt werden, während die IGMP-Proxy Funktionen für die IP-Adresse 225.0.2.0/24 und 239.0.0.0/8 (d.h. ebenfalls für einen Multicast Dienst) über die weitere Proxy-Einheit 51 geführt werden. Rein exemplarisch ist in diesem Beispiel vorgesehen, dass beispielsweise der interne Netzwerkteil 40' die IP-Adresse 192.168.1.0/24 aufweist, die erste Servereinrichtung 11 die IP-Adresse 10.1.1.1, die zweite Servereinrichtung 12 die IP-Adresse 10.1.2.1, die Proxy-Einheit 50 (aus Sicht der ersten Servereinrichtung 11) die IP-Adresse 10.1.1.2 und die weitere Proxy-Einheit 51 (aus Sicht der zweiten Servereinrichtung 12) die IP-Adresse 10.1.2.2. In dieser Situation ist die Proxy-Einheit 50 derart konfiguriert, dass bei einer Anforderung der IP-Adresse 225.0.1.0/24 aus dem internen Teil 40' des lokalen Netzes (bzw. der lokalen domain) die erste Servereinrichtung 11 kontaktiert wird, währenddem bei einer Anforderung der IP-Adresse 225.0.2.0/24 bzw. 239.0.0.0/8 aus dem internen Teil 40' des lokalen Netzes die zweite Servereinrichtung 12 kontaktiert wird. Hierbei bilden die Proxy-Einheit 50 und die weitere Proxy-Einheit 51 virtuelle Schnittstellen.

Zur Herbeiführung einer solchen Konfiguration des Empfängers 40 bzw. dessen Proxy-Einheit 50 bzw. weitere Proxy-Einheit 51 ist es erfindungsgemäß erforderlich, dass Konfigurationsinformationen zur Einstellung dieser Konfiguration an den Empfänger übertragen werden, beispielsweise in der folgenden Art:

| | |
|---|---|
| Ziel-Adresse: 10.1.2.0/24 | : Servereinrichtung 10.1.2.1 |
| Ziel-Adresse: 10.1.3.0/24 | : Servereinrichtung 10.1.2.1 |
| Ziel-Adresse: 225.0.1.0/24 | : Servereinrichtung 10.1.1.1 |
| Ziel-Adresse: 225.0.2.0/24 | : Servereinrichtung 10.1.2.1 |
| Ziel-Adresse: 239.0.0.0/8 | : Servereinrichtung 10.1.2.1 |

Der Empfänger 40 bzw. die Proxy-Einheit 50 / weitere Proxy-Einheit 51 wertet bzw. werten diese seitens des Kommunikationsnetzwerks übertragene Konfigurationsinformation dann in der folgenden Weise aus:
-- die ersten beiden Zeilen werden zum Anlegen der Unicast-Routen verwendet;
-- die Zeilen 3 bis 5 werden zur automatisierten und automatischen Konfiguration des IGMP-Proxy (bzw. im Beispiel der (zwei) IGMP-Proxies (Proxy-Einheit 50 und weitere Proxy-Einheit 51) verwendet. IGMP Membership reports für 225.0.1.0/24 werden über die Proxy-Einheit 50 verschickt. IGMP Membership reports für 225.0.2.0/24 und 239.0.0.0/8 werden über die weitere Proxy-Einheit 51 verschickt."Group specific Queries" (gemäß dem IGMP-Protokoll) werden analog über die zuständige Schnittstelle (bzw. Proxy-Einheit) beantwortet.

Für "General Queries" (gemäß dem IGMP-Protokoll) werden über die (virtuelle) Schnittstelle der Proxy-Einheit 50 nur "Membership-Reports" für 225.0.1/8 geschickt, über die (virtuelle) Schnittstelle der weiteren Proxy-Einheit 51 nur "Membership Reports" für 225.0.2.0/24 bzw. 239.0.0.0/8. Ein "General Query", der über die Proxy-Einheit 50 empfangen wurde, löst keine "Membership-Reports" über die weitere Proxy-Einheit 51 aus

Erfindungsgemäß ist es vorteilhaft vorgesehen, dass NAT-Funktionalitäten (Network Address Translation) von dem Empfänger 40 bzw. den Proxy-Einheiten 50, 51 weiterhin unterstützt werden und unverändert verwendet werden. Hierbei müssen die Adressen im Absenderfeld ("Source-Feid") in iGivir-ivachrichien (bzw. iGMP-Fakeien) und in der Multicast-Dataplane bei Bedarf entsprechend gesetzt werden.

## Patentansprüche

1. Verfahren zur Konfiguration eines Empfängers (40), wobei der Empfänger (40) zum Empfang von mittels eines Kommunikationsnetzwerks verteilten Multicast-Signalen vorgesehen ist, wobei die Multicast-Signale dem Empfänger (40) über wenigstens eine Servereinrichtung (11, 12) zur Verfügung gestellt werden, **dadurch gekennzeichnet daß** der Empfänger (40) eine Proxy-Einheit (50) zur Kommunikation mit der Servereinrichtung (11, 12) aufweist, wobei der Empfänger (40) eine Konfigurationsinformation zur Bestimmung der durch die Proxy-Einheit (50) zu verwendenden Schnittstelle für die Kommunikationsrichtung vom Empfänger (40) zur Servereinrichtung (11, 12) aufweist, wobei die Konfigurationsinformation dem Empfänger (40) zur Laufzeit des Empfängers (40) mittels eines Konfigurations- oder Routingprotokolls übermittelt wird, wobei der Empfänger (40) neben der Proxy-Einheit (50) eine weitere Proxy-Einheit (51) zur Kommunikation mit der Servereinrichtung (11, 12) aufweist, wobei der Empfänger (40) eine weitere Konfigurationsinformation zur Bestimmung der durch die weitere Proxy-Einheit (51) zu verwendenden Schnittstelle für die Kommunikationsrichtung vom Empfänger (40) zur Servereinrichtung (11, 12) aufweist, wobei die weitere Konfigurationsinformation dem Empfänger (40) zur Laufzeit des Empfängers (40) mittels eines Konfigurations- oder Routingprotokolls übermittelt wird, wobei die Proxy-Einheit (50) und/oder die weitere Proxy-Einheit (51) jeweils eine eigene Routingtabelle aufweist, die unabhängig von einer Routingtabelle des Empfängers (40) ist, wobei durch Verwendung eines Konfgurationsprotokolls eine geänderte Routingtabelle der Proxy-Einheit (50) an den Empfänger (40) übertragen wird und/oder wobei durch Verwendung eines Konfigurationsprotokolls eine geänderte Routingtabelle der weiteren Proxy-Einheit (50) an den Empfänger (40) übertragen wird und/oder wobei durch netzwerkseitige Anpassung die jeweils eigene Routingtabelle der Proxy-Einheit (50) und/oder der weiteren Proxy-Einheit (51) modifiziert wird.

2. Verfahren nach Anspruch 1, **dadurch gekennzeichnet, dass** die Konfigurationsinformation dem Empfänger (40) mittels eines der folgenden Konfigurations- oder Routingprotokolle zur Verfügung gestellt wird:
- Dynamic Host Configuration Protocol, DHCP-Protokoll, unter Verwendung der classless static route option, Option 121,
- Dynamic Host Configuration Protocol, DHCP-Protokoll, unter Verwendung der Option 33,
- Routing Information Protocol, RIP-Protokoll,
- Open Shortest Path First protocol, OSPF-Protokoll.

3. Verfahren nach Anspruch 1 oder 2, **dadurch gekennzeichnet, dass** die weitere Konfigurationsinformation dem Empfänger (40) mittels eines der folgenden Konfigurations- oder Routingprotokolle zur Verfügung gestellt wird:
- Dynamic Host Configuration Protocol, DHCP-Protokoll, unter Verwendung der classless static route option, Option 121,
- Dynamic Host Configuration Protocol, DHCP-Protokoll, unter Verwendung der Option 33,
- Routing Information Protocol, RIP-Protokoll,
-- Open Shortest Path First protocol, OSPF-Protokoll.

4. Verfahren nach einem der vorhergehenden Ansprüchen, **dadurch gekennzeichnet, dass** die Multicast-Signale Internet Protocol Television, IPTV, Fernsehsignale sind.

5. Verfahren nach einem der vorhergehenden Ansprüchen, **dadurch gekennzeichnet, dass** neben der Konfigurationsinformation Weiterleitungs-Einträge zu dem Empfänger (40) übertragen werden, mittels eines der folgenden Konfigurations- oder Routingprotokolle:
- Dynamic Host Configuration Protocol, DHCP-Protokoll, unter Verwendung der classless static route option, Option 121,
- Dynamic Host Configuration Protocol, DHCP-Protokoll, unter Verwendung der Option 33,
- Routing Information Protocol, RIP-Protokoll,
- Open Shortest Path First protocol, OSPF-Protokoll.

6. Empfänger (40) zum Empfang von mittels eines Kommunikationsnetzwerks verteilten Multicast-Signalen, wobei eine Servereinrichtung (11, 12) zur Übertragung der Multicast-Signale zu dem Empfänger (40) vorgesehen ist, **dadurch gekennzeichnet daß** der Empfänger (40) eine Proxy-Einheit (50) zur Kommunikation mit der Servereinrichtung (11, 12) aufweist, wobei der Empfänger (40) eine Konfigurationsinformation zur Bestimmung der durch die Proxy-Einheit (50) zu verwendenden Schnittstelle für die Kommunikationsrichtung vom Empfänger (40) zur Servereinrichtung (11, 12) aufweist, wobei der Empfänger (40) zum Empfang der Konfigurationsinformation zur Laufzeit des Empfängers (40) mittels eines Konfigurations- oder Routingprotokolls vorgesehen ist, wobei der Empfänger (40) neben der Proxy-Einheit (50) eine weitere Proxy-Einheit (51) zur Kommunikation mit der Servereinrichtung (11, 12) aufweist, wobei der Empfänger (40) eine weitere Konfigurationsinformation zur Bestimmung der durch die weitere Proxy-Einheit (51) zu verwendenden Schnittstelle für die Kommunikationsrichtung vom Empfänger (40) zur Servereinrichtung (11, 12) aufweist, wobei der Empfänger (40) zum Empfang der weiteren Konfigurationsinformation zur Laufzeit des Empfängers (40) mittels eines Konfigurations- oder Routingprotokolls vorgesehen ist, wobei die Proxy-Einheit (50) und/oder die weitere Proxy-Einheit (51) jeweils eine eigene Routingtabelle aufweist, die unabhängig von einer Routingtabelle des Empfängers (40) ist, wobei der Empfänger (40) zum Empfang einer, durch Verwendung eines Konfigurationsprotokolls an den Empfänger (40) übertragenen, geänderten Routingtabelle der Proxy-Einheit (50) vorgesehen Ist und/oder wobei der Empfänger (40) zum Empfang einer, durch Verwendung eines Konfigurationsprotokolls an den Empfänger (40) übertragenen, geänderten Routingtabelle der weiteren Proxy-Einheit (50) vorgesehen ist und/oder wobei der Empfänger vorgesehen ist, dass durch netzwerkseitige Anpassung die jeweils eigene Routingtabelle der Proxy-Einheit (50) und/oder der weiteren Proxy-Einhett (51) modifiziert wird.

7. Empfänger (40) nach Anspruch 6, **dadurch gekennzeichnet, dass** der Empfänger zum Empfang der Konfigurationsinformation mittels eines der folgenden Konfigurations- oder Routingprotokolle vorgesehen Ist:
- Dynamic Host Configuration Protocol, DHCP-Protokoll, unter Verwendung der classless static route option, Option 121,
- Dynamic Host Configuration Protocol, DHCP-Protokoll, unter Verwendung der Option 33,
-- Routing Information Protocol, RIP-Protokoll,
- Open Shortest Path First protocol, OSPF-Protokoll.

8. Empfänger (40) nach einem der Ansprüche 6 oder 7, **dadurch gekennzeichnet, dass** der Empfänger zum Empfang der weiteren Konfigurationsinformation mittels eines der folgenden Konfigurations- oder Routingprotokolle vorgesehen ist:
- Dynamic Host Configuration Protocol, DHCP-Protokoll, unter Verwendung der classless static route option, Option 121,
- Dynamic Host Configuration Protocol, DHCP-Protokoll, unter Verwendung der Option,
- Routing Information Protocol, RIP-Protokoll,
- Open Shortest Path First protocol, OSPF-Protokoll.

9. System zur Verteilung von Multicast-Signalen in einem Kommunikationsnetzwerk von einer Servereinrichtung (11, 12) an eine Mehrzahl von Empfängern (40), wobei die Multicast-Signale dem Empfänger (40) Ober wenigstens eine Servereinrichtung (11, 12) zur Verfügung gestellt werden, **dadurch gekennzeichnet daß** der Empfänger (40) eine Proxy-Einheit (50) zur Kommunikation mit der Servereinrichtung (11, 12) aufweist, wobei der Empfänger (40) eine Konfigurationsinformation zur Bestimmung der durch die Proxy-Einheit (50) zu verwendenden Schnittstelle für die Kommunikationsrichtung vom Empfänger (40) zur Servereinrichtung (11, 12) aufweist, wobei die Konfigurationsinformation dem Empfänger (40) zur Konfiguration des Empfängers (40) zur Laufzeit des Empfängers (40) mittels eines Konfigurations- oder Routingprotokolls übermittelt wird, wobei der Empfänger (40) neben der Proxy-Einheit (50) eine weitere Proxy-Einheit (51) zur Kommunikation mit der Servereinrichtung (11, 12) aufweist, wobei der Empfänger (40) eine weitere Konfigurationsinformation zur Bestimmung der durch die weitere Proxy-Einheit (51) zu verwendenden Schnittstelle für die Kommunikationsrichtung vom Empfänger (40) zur Servereinrichtung (11, 12) aufweist, wobei die weitere Konfigurationsinformation dem Empfänger (40) zur Laufzeit des Empfängers (40) mittels eines Konfigurations- oder Routingprotokolls übermittelt wird, wobei die Proxy-Einheit (50) und/oder die weitere Proxy-Einheit (51) jeweils eine eigene Routingtabelle aufweist, die unabhängig von einer Routingtabelle des Empfängers (40) ist, wobei durch Verwendung eines Konfigurationsprotokolls eine geänderte Routingtabelle der Proxy-Einheit (50) an den Empfänger (40) übertragen wird und/oder wobei durch Verwendung eines Konfigurationsprotokolls eine geänderte Routingtabelle der weiteren Proxy-Einheit (50) an den Empfänger (40) übertragen wird und/oder wobei durch netzwerkseitige Anpassung die jeweils eigene Routingtabelle der Proxy-Einheit (50) und/oder der weiteren Proxy-Einheh (51) modifiziert wird.

10. Programm mit einem computerlesbaren Programmcode zur Steuerung eines Empfängers nach einem der Ansprüche 6 bis 8 oder eines Systems nach Anspruch 9, mit dessen Hilfe alle Schritte eines Verfahrens nach einem der Ansprüche 1 bis 5 durchführbar sind.

11. Computerprogrammprodukt mit einem computerlesbaren Programmcode zur Steuerung eines Empfängers (40) nach einem der Ansprüche 6 bis 8 oder eines Systems nach Anspruch 9, der dazu geeignet ist, dass alle Schritte eines Verfahrens nach einem der Ansprüche 1 bis 5 durchführbar sind, wenn der computerlesbare Programmcode auf einer programmierbaren Einrichtung ausgeführt wird.

## Claims

1. Method for configuring a receiver (40), wherein the receiver (40) is provided for receiving multicast signals distributed by means of a communication network, wherein the multicast signals are made available to the receiver (40) via at least one server device (11, 12), **characterised in that** the receiver (40) comprises a proxy unit (50) for communicating with the server device (11, 12), wherein the receiver (40) comprises an item of configuration information for determining the interface, which is to be used by the proxy unit (50), for the communication direction from the receiver (40) to the server device (11, 12), wherein the item of configuration information is transferred to the receiver (40) at the running time of the receiver (40) by means of a configuration or routing protocol, wherein the receiver (40) comprises, in addition to the proxy unit (50), a further proxy unit (51) for communicating with the server device (11, 12), wherein the receiver (40) comprises a further item of configuration information for determining the interface, which is to be used by the further proxy unit (51), for the communication direction from the receiver (40) to the server device (11, 12), wherein the further item of configuration information is transferred to the receiver (40) at the running time of the receiver (40) by means of a configuration or routing protocol, wherein the proxy unit (50) and/or the further proxy unit (51) has/have in each case a dedicated routing table which is independent of a routing table of the receiver (40), wherein by using a configuration protocol a changed routing table of the proxy unit (50) is transmitted to the receiver (40) and/or wherein by using a configuration protocol a changed routing table of the further proxy unit (50) is transmitted to the receiver (40) and/or wherein by means of network-side adaptation the respectively dedicated routing table of the proxy unit (50) and/or of the further proxy unit (51) is modified.

2. Method as claimed in claim 1, **characterised in that** the item of configuration information is made available to the receiver (40) by means of one of the following configuration or routing protocols:
- Dynamic Host Configuration Protocol, DHCP-Protocol, using the classless static route option, Option 121,
- Dynamic Host Configuration Protocol, DHCP-Protocol, using option 33,
- Routing Information Protocol, RIP-Protocol,
- Open Shortest Path First Protocol, OSPF-Protocol.

3. Method as claimed in claim 1 or 2, **characterised in that** the further item of configuration information is made available to the receiver (40) by means of one of the following configuration or routing protocols:
- Dynamic Host Configuration Protocol, DHCP-Protocol, using the classless static route option, Option 121,
- Dynamic Host Configuration Protocol, DHCP-Protocol, using option 33,
- Routing Information Protocol, RIP-Protocol,
- Open Shortest Path First Protocol, OSPF-Protocol.

4. Method as claimed in any one of the preceding claims, **characterised in that** the multicast signals are Internet Protocol Television, IPTV, television signals.

5. Method as claimed in any one of the preceding claims, **characterised in that** in addition to the item of configuration information, forwarding entries are transmitted to the receiver (40) by means of one of the following configuration or routing protocols:
- Dynamic Host Configuration Protocol, DHCP-Protocol, using the classless static route option, Option 121,
- Dynamic Host Configuration Protocol, DHCP-Protocol, using option 33,
- Routing Information Protocol, RIP-Protocol,
- Open Shortest Path First Protocol, OSPF-Protocol.

6. Receiver (40) for receiving multicast signals distributed by means of a communication network, wherein a server device (11, 12) is provided for transmitting the multicast signals to the receiver (40), **characterised in that** the receiver (40) comprises a proxy unit (50) for communicating with the server device (11, 12), wherein the receiver (40) comprises an item of configuration information for determining the interface, which is to be used by the proxy unit (50), for the communication direction from the receiver (40) to the server device (11, 12), wherein the receiver (40) is provided for receiving the item of configuration information at the running time of the receiver (40) by means of a configuration or routing protocol, wherein the receiver (40) comprises, in addition to the proxy unit (50), a further proxy unit (51) for communicating with the server device (11, 12), wherein the receiver (40) comprises a further item of configuration information for determining the interface, which is to be used by the further proxy unit (51), for the communication direction from the receiver (40) to the server device (11, 12), wherein the receiver (40) is provided for receiving the further item of configuration information at the running time of the receiver (40) by means of a configuration or routing protocol, wherein the proxy unit (50) and/or the further proxy unit (51) has/have in each case a dedicated routing table which is independent of a routing table of the receiver (40), wherein the receiver (40) is provided for receiving a changed routing table of the proxy unit (50) which is transmitted to the receiver (40) by using a configuration protocol, and/or wherein the receiver (40) is provided for receiving a changed routing table of the further proxy unit (50) which is transmitted to the receiver (40) by using a configuration protocol, and/or the receiver is provided that by means of network-side adaptation the respectively dedicated routing table of the proxy unit (50) and/or of the further proxy unit (51) is modified.

7. Receiver (40) as claimed in claim 6, **characterised in that** the receiver is provided for receiving the item of configuration information by means of one of the following configuration or routing protocols:
- Dynamic Host Configuration Protocol, DHCP-Protocol, using the classless static route option, Option 121,
- Dynamic Host Configuration Protocol, DHCP-Protocol, using option 33,
- Routing Information Protocol, RIP-Protocol,
- Open Shortest Path First Protocol, OSPF-Protocol.

8. Receiver (40) as claimed in any one of claims 6 or 7, **characterised in that** the receiver is provided for receiving the further item of configuration information by means of one of the following configuration or routing protocols:
- Dynamic Host Configuration Protocol, DHCP-Protocol, using the classless static route option, Option 121,
- Dynamic Host Configuration Protocol, DHCP-Protocol, using option 33,
- Routing Information Protocol, RIP-Protocol,
- Open Shortest Path First Protocol, OSPF-Protocol.

9. System for distributing multicast signals in a communication network from a server device (11, 12) to a plurality of receivers (40), wherein the multicast signals are made available to the receiver (40) via at least one server device (11, 12), **characterised in that** the receiver (40) comprises a proxy unit (50) for communicating with the server device (11, 12), wherein the receiver (40) comprises an item of configuration information for determining the interface, which is to be used by the proxy unit (50), for the communication direction from the receiver (40) to the server device (11, 12), wherein the item of configuration information is transferred to the receiver (40) for configuring the receiver (40) at the running time of the receiver (40) by means of a configuration or routing protocol, wherein the receiver (40) comprises, in addition to the proxy unit (50), a further proxy unit (51) for communicating with the server device (11, 12), wherein the receiver (40) comprises a further item of configuration information for determining the interface, which is to be used by the further proxy unit (51), for the communication direction from the receiver (40) to the server device (11, 12), wherein the further item of configuration information is transferred to the receiver (40) at the running time of the receiver (40) by means of a configuration or routing protocol, wherein the proxy unit (50) and/or the further proxy unit (51) has/have in each case a dedicated routing table which is independent of a routing table of the receiver (40), wherein by using a configuration protocol a changed routing table of the proxy unit (50) is transmitted to the receiver (40) and/or wherein by using a configuration protocol a changed routing table of the further proxy unit (50) is transmitted to the receiver (40) and/or wherein by means of network-side adaptation the respectively dedicated routing table of the proxy unit (50) and/or of the further proxy unit (51) is modified.

10. Program comprising a computer-readable program code for controlling a receiver as claimed in any one of claims 6 to 8 or a system as claimed in claim 9, with the aid of which all of the steps of a method as claimed in any one of claims 1 to 5 can be carried out.

11. Computer program product comprising a computer-readable program code for controlling a receiver (40) as claimed in any one of claims 6 to 8 or a system as claimed in claim 9, which is suitable for allowing all of the steps of a method as claimed in any one of claims 1 to 5 to be carried out, if the computer-readable program code is run on a programmable device.

## Revendications

1. Procédé de configuration d'un récepteur (40), dans lequel le récepteur (40) est prévu pour la réception de signaux de multidiffusion distribués au moyen d'un réseau de communication, dans lequel les signaux de multidiffusion sont fournis au récepteur (40) par l'intermédiaire d'au moins un moyen serveur (11, 12), **caractérisé en ce que** le récepteur présente une unité proxy (50) pour la communication avec le moyen serveur (11, 12), dans lequel le récepteur (40) présente une information de configuration pour déterminer l'interface à utiliser par l'unité proxy (50) pour le sens de communication allant du récepteur (40) au moyen serveur (11, 12), dans lequel l'information de configuration est transmise au récepteur (40) pendant la durée de fonctionnement du récepteur (40) au moyen d'un protocole de configuration ou de routage, dans lequel le récepteur (40) présente, outre l'unité proxy (50), une unité proxy supplémentaire (51) pour la communication avec le moyen serveur (11, 12), dans lequel le récepteur (40) présente une information de configuration supplémentaire pour déterminer l'interface à utiliser par l'unité proxy supplémentaire (51) pour le sens de communication allant du récepteur (40) au moyen serveur (11, 12), dans lequel l'information de configuration supplémentaire est transmise au récepteur (40) pendant la durée de fonctionnement du récepteur (40) au moyen d'un protocole de configuration ou de routage, dans lequel l'unité proxy (50) et/ou l'unité proxy supplémentaire (51) présentent chacune leur propre table de routage qui est indépendante d'une table de routage du récepteur (40), dans lequel une table de routage modifiée de l'unité proxy (50) est transférée au récepteur (40) par l'utilisation d'un protocole de configuration et/ou dans lequel une table de routage modifiée de l'unité proxy (50) supplémentaire est transférée au récepteur (40) par l'utilisation d'un protocole de configuration et/ou dans lequel la propre table de routage respective de l'unité proxy (50) et/ou de l'unité proxy supplémentaire (51) étant modifiée par adaptation côté réseau.

2. Procédé selon la revendication 1, **caractérisé en ce que** l'information de configuration est fournie au récepteur (40) au moyen d'un des protocoles de routage ou de configuration suivants :
- Dynamic Host Configuration Protocol, protocole DHCP, en utilisant l'option 121 classless static route,
- Dynamic Host Configuration Protocol, protocole DHCP, en utilisant l'option 33,
- Routing Information Protocol, protocole RIP,
- Open Shortest Path First protocol, protocole OSPF.

3. Procédé selon la revendication 1 ou 2, **caractérisé en ce que** l'information de configuration supplémentaire est fournie au récepteur (40) au moyen d'un des protocoles de routage ou de configuration suivants :
- Dynamic Host Configuration Protocol, protocole DHCP, en utilisant l'option 121 classless static route,
- Dynamic Host Configuration Protocol, protocole DHCP, en utilisant l'option 33,
- Routing Information Protocol, protocole RIP,
- Open Shortest Path First protocol, protocole OSPF.

4. Procédé selon l'une des revendications précédentes, **caractérisé en ce que** les signaux de multidiffusion sont des signaux de télévision Internet Protocol Télévision, IPTV.

5. Procédé selon l'une des revendications précédentes, **caractérisé en ce que**, outre l'information de configuration, des entrées de transmission au récepteur (40) sont transférées au moyen d'un des protocoles de routage ou de configuration suivants :
- Dynamic Host Configuration Protocol, protocole DHCP, en utilisant l'option 121 classless static route,
- Dynamic Host Configuration Protocol, protocole DHCP, en utilisant l'option 33,
- Routing Information Protocol, protocole RIP,
- Open Shortest Path First protocol, protocole OSPF.

6. Récepteur (40) destiné à la réception de signaux de multidiffusion distribués au moyen d'un réseau de communication, dans lequel un moyen serveur (11, 12) est prévu pour transférer les signaux de multidiffusion au récepteur (40), **caractérisé en ce que** le récepteur (40) présente une unité proxy (50) pour la communication avec le moyen serveur (11, 12), dans lequel le récepteur (40) présente une information de configuration pour déterminer l'interface à utiliser par l'unité proxy (50) pour le sens de communication allant du récepteur (40) au moyen serveur (11, 12), dans lequel le récepteur (40) est prévu pour la réception de l'information de configuration pendant la durée de fonctionnement du récepteur (40) au moyen d'un protocole de configuration ou de routage, dans lequel le récepteur (40) présente, outre l'unité proxy (50), une unité proxy supplémentaire (51) pour la communication avec le moyen serveur (11, 12), dans lequel le récepteur (40) présente une information de configuration supplémentaire pour déterminer l'interface à utiliser par l'unité proxy supplémentaire (51) pour le sens de communication allant du récepteur (40) au moyen serveur (11, 12), le récepteur (40) étant prévu pour la réception de l'information de configuration supplémentaire pendant la durée de fonctionnement du récepteur (40) au moyen d'un protocole de configuration ou de routage, dans lequel l'unité proxy (50) et/ou l'unité proxy supplémentaire (51) présentent chacune leur propre table de routage qui est indépendante d'une table de routage du récepteur (40), dans lequel le récepteur (40) est prévu pour la réception d'une table de routage modifiée de l'unité proxy (50) transférée au récepteur (40) en utilisant un protocole de configuration et/ou dans lequel le récepteur (40) est prévu pour la réception d'une table de routage modifiée de l'unité proxy (50) supplémentaire transférée au récepteur (40) en utilisant un protocole de configuration et/ou dans lequel le récepteur est prévu pour que la propre table de routage respective de l'unité proxy (50) et/ou de l'unité proxy supplémentaire (51) soit modifiée par une adaptation côté réseau.

7. Récepteur (40) selon la revendication 6, **caractérisé en ce que** le récepteur est prévu pour la réception de l'information de configuration au moyen d'un des protocoles de routage et de configuration suivants :
- Dynamic Host Configuration Protocol, protocole DHCP, en utilisant l'option 121 classless static route,
- Dynamic Host Configuration Protocol, protocole DHCP, en utilisant l'option 33,
- Routing Information Protocol, protocole RIP,
- Open Shortest Path First protocol, protocole OSPF.

8. Récepteur (40) selon l'une des revendications 6 ou 7, **caractérisé en ce que** le récepteur est prévu pour la réception de l'information de configuration supplémentaire au moyen d'un des protocoles de routage et de configuration suivants :
- Dynamic Host Configuration Protocol, protocole DHCP, en utilisant l'option 121 classless static route,
- Dynamic Host Configuration Protocol, protocole DHCP, en utilisant l'option 33,
- Routing Information Protocol, protocole RIP,
- Open Shortest Path First protocol, protocole OSPF.

9. Système de distribution de signaux de multidiffusion dans un réseau de communication depuis un moyen serveur (11, 12) à une pluralité de récepteurs (40), dans lequel les signaux de multidiffusion sont fournis au récepteur (40) par l'intermédiaire d'au moins un moyen serveur (11, 12), **caractérisé en ce que** le récepteur (40) présente une unité proxy (50) pour la communication avec le moyen serveur (11, 12), dans lequel le récepteur (40) présente une information de configuration pour déterminer l'interface à utiliser par l'unité proxy (50) pour le sens de communication allant du récepteur (40) au moyen serveur (11, 12), dans lequel l'information de configuration est transmise au récepteur (40) pour la configuration du récepteur (40) pendant la durée de fonctionnement du récepteur (40) au moyen d'un protocole de configuration ou de routage, dans lequel le récepteur (40) présente, outre l'unité proxy (50), une unité proxy supplémentaire (51) pour la communication avec le moyen serveur (11, 12), dans lequel le récepteur (40) présente une information de configuration supplémentaire pour déterminer l'interface à utiliser par l'unité proxy supplémentaire (51) pour le sens de communication allant du récepteur (40) au moyen serveur (11, 12), dans lequel l'information de configuration supplémentaire est transmise au récepteur (40) pendant la durée de fonctionnement du récepteur (40) au moyen d'un protocole de configuration ou de routage, dans lequel l'unité proxy (50) et/ou l'unité proxy supplémentaire (51) présentent chacune leur propre table de routage qui est indépendante d'une table de routage du récepteur (40), dans lequel une table de routage modifiée de l'unité proxy (50) est transférée au récepteur (40) par l'utilisation d'un protocole de configuration et/ou dans lequel une table de routage modifiée de l'unité proxy (50) supplémentaire est transférée au récepteur (40) par l'utilisation d'un protocole de configuration et/ou dans lequel la propre table de routage respective de l'unité proxy (50) et/ou de l'unité proxy supplémentaire (51) est modifiée par une adaptation côté réseau.

10. Programme comportant un code de programme lisible par ordinateur pour commander un récepteur selon l'une des revendications 6 à 8 ou d'un système selon la revendication 9, à l'aide duquel toutes les étapes d'un procédé selon l'une des revendications 1 à 5 sont exécutables.

11. Produit programme informatique comportant un code de programme lisible par ordinateur pour commander un récepteur (40) selon l'une des revendications 6 à 8 ou d'un système selon la revendication 9, apte à faire exécuter toutes les étapes d'un procédé selon l'une des revendications 1 à 5 lorsque le code de programme est réalisé sur un moyen programmable.
